# EUROPÄISCHE PATENTSCHRIFT

(11) **EP 1 692 037 B1**
(45) Veröffentlichungstag und Bekanntmachung des Hinweises auf die Patenterteilung: **13.01.2010**
(21) Anmeldenummer: 04820589.2
(22) Anmeldetag: 12.11.2004
(51) Int. Cl.: B62D 33/06, B62D 33/063, B62D 21/15

(54) **FAHRERHAUS-TRAGSTRUKTUR FÜR EIN NUTZFAHRZEUG MIT EINER SICHERHEITSZELLE**
DRIVER'S CAB SUPPORTING STRUCTURE FOR A COMMERCIAL VEHICLE HAVING A SAFETY CELL
STRUCTURE DE SUPPORT DE CABINE DE CONDUITE POUR UN VEHICULE UTILITAIRE POURVU D'UNE CELLULE DE SECURITE

(30) Priorität: 11.12.2003 DE 10357930
(43) Veröffentlichungstag der Anmeldung: 23.08.2006
(73) Patentinhaber: Daimler AG, 70327 Stuttgart (DE)
(72) Erfinder: DAMMANN, Rüdiger, 71067 Sindelfingen (DE); HERZOG, Gerd, 71573 Allmersbach (DE); STECHOW, Roland, 70372 Stuttgart (DE)
(74) Vertreter: JENSEN & SON
(86) Internationale Anmeldenummer: PCT/EP2004/012832
(87) Internationale Veröffentlichungsnummer: WO 2005/061313

(56) Entgegenhaltungen:
- EP-A- 0 685 381
- EP-A- 1 164 073
- DE-A1- 2 853 621
- US-B1- 6 520 565

## Beschreibung

Die Erfindung betrifft eine Fahrerhaus-Tragstruktur für ein Nutzfahrzeug mit einer Sicherheitszelle, insbesondere für ein schweres Nutzfahrzeug, gemäß dem Oberbegriff des Anspruchs 1.

Aus der Patentschrift EP 0718 176 B1 ist eine Tragstruktur für ein Fahrerhaus eines Nutzfahrzeugs bekannt, das unter Einschluss der Türen als Sicherheitszelle für Fahrer und Beifahrer ausgebildet ist. Das Fahrerhaus ist durch ein wandintegrales Versteifungsgerippe verstärkt und versteift. Die Rundumversteifung des Fahrerhauses ist in drei Höhenlagen, im Bereich des Fahrerhaus-Bodens, im Bereich des Übergangs zum Dach und im Brüstungsbereich unterhalb der Windschutzscheibe, vorgesehen. In den drei Zonen kann gezielt von außen in Horizontalrichtung einwirkenden Kräften entgegengewirkt werden. Das Fahrerhaus wird weniger als bei bisher bekannten Lösungen verformt. Zur Versteifung sind Frontwand, Rückwand und Seitenwände des Fahrerhauses durch eine presstechnische Profilierung von deren Innen- und Außenblechpressteilen sowie durch partielle weitere Verstärkung dieser Versteifungsprofilbereiche mit zusätzlichen Blechpressprofilen verstärkt. Die Verstärkungen sind in den drei Höhenlagen und in Vertikalebenen im Bereich der A- bzw. Scharniersäulen, der B- bzw. Schlosssäulen, der C-Säulen und wenigstens einer Säule in der Rückwand umlaufend ausgebildet.

Aus der gattungsbildenden US6520565A ist eine Fahrerhaus-Tragstruktur für ein Nutzfahrzeug bekannt, bei der eine Sicherheitszelle in einem Fahrerhaus mit einem Frontbereich und einer einem Ladebereich zugewandten Rückseite angeordnet ist, wobei ein Sitzbereich von einer steifen Sicherheitszelle umgeben ist, an die sich zwischen Sitzbereich und Ladebereich ein Verformungsbereich zur Aufnahme von Verformungsenergie anschließt, und mit einem Längsträger, wobei die Sicherheitszelle mit dem Längsträger gegenüber einem Fahrzeugrahmen verschiebbar ausgebildet ist.

Aus der EP1164073A ist eine Fahrerhaus-Tragstruktur bekannt, bei der eine käfigartige Sicherheitszelle vorgesehen ist, die bei einem Aufprall ihre ursprüngliche Form beibehält.

Ferner ist aus der EP0685381A eine Fahrerhaus-Tragstruktur bekannt, bei der ein Überrollbügel einen Teil einer käfigartigen Fahrerhausstruktur eingesetzt ist.

Aufgabe der Erfindung ist es, eine Fahrerhaus-Tragstruktur für ein Nutzfahrzeug mit einer Sicherheitszelle, insbesondere für ein schweres Nutzfahrzeug, zu verbessern.

Die Aufgabe wird erfindungsgemäß durch die Merkmale des Anspruchs 1 gelöst.

Bei der erfindungsgemäßen Fahrerhaus-Tragstruktur ist ein Sitzbereich von einer steifen, käfigartigen Sicherheitszelle umgeben, an die sich zwischen Sitzbereich und Ladebereich ein Verformungsbereich zur Aufnahme von Verformungsenergie anschließt. Dabei ist ein Teil eines Längsträgers hinter dem Sitzbereich als Verformungsbereich ausgebildet, so dass ein weiteres Stauchvolumen verfügbar gemacht werden kann. Diese Ausbildung ist besonders für ein kurzes Fahrerhaus ohne Wohn- und Schlafbereich geeignet, bei dem kein wesentliches Stauchvolumen im Fahrerhaus selbst verfügbar ist. Vorzugsweise ist der Verformungsbereich in dem Längsträger hinter dem Sitzbereich und einer Abstützung gegen einen Fahrzeugrahmen integriert. Die Sicherheitszelle ist besonders steif ausgelegt, während der Verformungsbereich besonders weich ausgelegt ist, so dass das Fahrerhaus örtlich versteift und im Sinne einer Verformungszone örtlich gezielt geschwächt ist. Damit kann erreicht werden, dass bei einem Auffahrunfall, beispielsweise von Lastkraftwagen auf Lastkraftwagen, bei dem ein Fahrerhaus soweit gestaucht wird, bis sich steife Strukturen des auffahrenden Lastkraftwagens wirkungsvoll abstützen können, ein ausreichender Überlebensraum für einen Fahrer in dem auffahrenden Lastkraftwagen erhalten bleibt. Dies ist besonders bei schweren Nutzfahrzeugen von mehreren 10 Tonnen vorteilhaft, da bei einem Auffahrunfall eine Abstützung kinetischer Energie kaum über das Fahrerhaus erreicht werden kann. Eine wirkungsvoll Abstützung erfolgt daher in der Riegel au einem Rahmen des vorstehenden Lastkraftwagens bzw. dessen Anhängers. Ein Aufbau dringt dabei entsprechend einem hinteren Überhang und einer Elastizität des Vorbaus des auffahrenden Nutzfahrzeugs in das auffahrende Fahrerhaus ein. Durch die erfindungsgemäße unterschiedliche Steifigkeit des Fahrerhaus ist ein notwendiges Stauchvolumen hinter dem Sitzbereich verfügbar während der Sitzbereich von der steifen Sicherheitszelle geschützt ist. Die Sicherheitszelle kann im Wesentlichen unverformt verschoben werden, während die kinetische Energie im Stauchvolumen des Verformungsbereichs in Verformungsenergie umgesetzt wird. Vorzugsweise ist zumindest der Fahrerplatz von der steifen Sicherheitszelle umgeben.

Ist die Sicherheitszelle gegenüber einem Fahrzeugrahmen verschiebbar angeordnet, kann auch bei einem Eintauchen des vorstehenden Aufbaus des vorausfahrenden Lastkraftwagens die Sicherheitszelle intakt bleiben und ein Überlebensraum erhalten bleiben. Wird das Fahrerhaus bzw. der Längsträger von einem Stoß getroffen, kann sich die Sicherheitszelle als Reaktion relativ zum Fahrzeugrahmen bewegen und Energie zum Verformungsbereich leiten. Die Sicherheitszelle bleibt intakt.

Umfasst der Verformungsbereich einen Teil des Fahrerhauses, kann bei einem ausreichend großen Fahrerhaus, vorzugsweise mit Wohn- und Schlafbereich hinter dem Sitzbereich, ein grodes Stauchvolumen erreicht werden. Vorzugsweise ist das Fahrerhaus in dem hinter dem Sitzbereich angeordneten Wohn- oder Schlafbereich als Verformungsbereich ausgebildet.

Weist der Längsträger einen Aufnahmebereich auf, der der Sicherheitszelle vorgelagert ist, kann verhindert werden, das bei einem Unfall ein Stoß direkt auf die Sicherheitszelle einwirkt und statt dessen auf den Verformungsbereich des Längsträgers und gegebenenfalls auf einen zusätzlichen Verformungsbereich vor dem Fahrerhaus einwirkt.

Ist der Längsträger L-förmig ausgebildet, wobei ein erster Schenkel des Längsträgers als Aufnahmebereich vor der Sicherheitszelle aufgestellt ist und auf einem zweiten Schenkel die Sicherheitszelle gelagert ist, kann ein Frontbereich des Fahrerhauses wirkungsvoll vor einer Intrusion geschützt werden. Eine Aufprallenergie kann zu dem oder den Verformungsbereichen umgeleitet werden.

Ist die Sicherheitszelle in der Art eines Quaders ausgebildet, wobei Quaderkanten durch Überrollbügel gebildet sind, ermöglicht dies eine günstige Kapselung des Fahrersitzes und/oder Beifahrersitzes mit der Sicherheitszelle und erleichtert eine Bergung von Insassen bei einem Unfall.

Ist die Sicherheitszelle aus einer separaten Fahrerzelle und einer separaten Beifahrerzelle gebildet, kann bei einem einseitigen Aufprall die Sicherheit für die weniger betroffene Zelle erhöht werden, da beide Zellen im Aufprallfall im Wesentlichen voneinander entkoppelt oder entkoppelbar sind und gegeneinander zumindest beweglich sind. Zweckmäßigerweise ist eine Verbindung zwischen Fahrer- und Beifahrerzelle weich oder lösbar ausgebildet, so dass sich die Sicherheitszellen im Deformationsfall voneinander lösen und unabhängig voneinander reagieren können.

Ist der Sicherheitszelle ein zusätzlicher Verformungsbereich vorgelagert, kann ein zusätzliches Stauchvolumen geschaffen und die Sicherheit der Insassen erhöht werden.

Weitere Vorteile ergeben sich aus der folgenden Zeichnungsbeschreibung, in der die Erfindung anhand zweier Ausführungsbeispiele näher erläutert ist. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Dabei zeigen:
- Fig. 1: schematisch eine Seitenansicht eines bevorzugten Nutzfahrzeugs mit angedeuteten Verformungszonen gemäß einem ersten Ausführungsbeispiel,
- Fig. 2: eine Auffahrsituation zwischen einem Nutzfahrzeug und dem bevorzugten Nutzfahrzeug aus Fig. 1 mit verformten Verformungszonen,
- Fig. 3: eine Auffahrsituation zweier herkömmlicher Nutzfahrzeuge zum Vergleich,
- Fig. 4: eine bevorzugte Sicherheitszelle,
- Fig. 5 a, b, c: ein bevorzugtes Nutzfahrzeug gemäß einem zweiten Ausführungsbeispiel in Seitenansicht(a), ein Detail einer Verformungszone (b), die Verformungszone nach einer Auffahrsituation (c).

In den Figuren sind gleiche oder sich entsprechende Teile grundsätzlich mit gleichen Bezugszeichen beziffert.

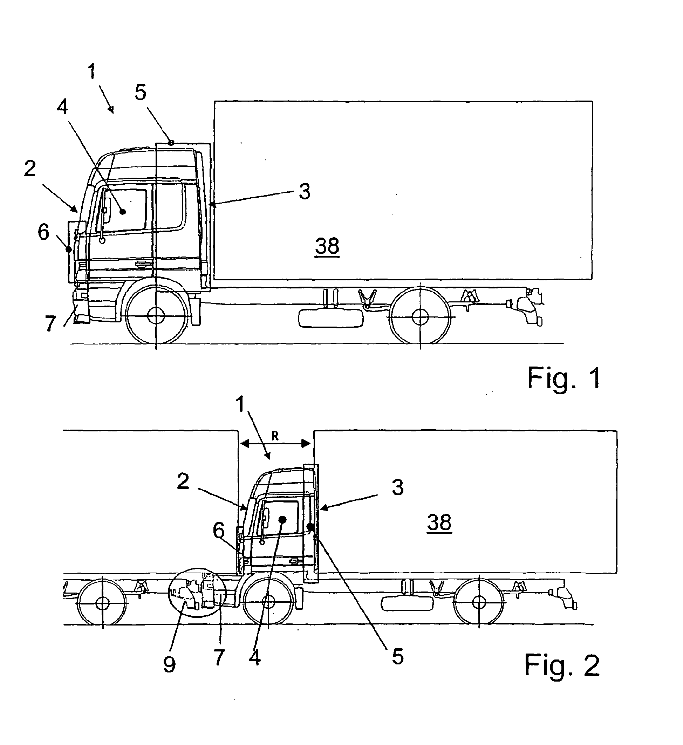

Fig. 1 zeigt schematisch eine Seitenansicht eines bevorzugten Nutzfahrzeugs mit angedeuteten Verformungsbereiche 5, 6 in einem Fahrerhaus 1 gemäß einem ersten Ausführungsbeispiel. Die Verformungsbereiche 5, 6 umfassen einen Teil des Fahrerhauses 1. An einer Rückseite 3 des Fahrerhauses 1 schließt sich ein Ladebereich 38, beispielsweise ein Aufleger, an. In einem Frontbereich 2 des Fahrerhauses 1 ist ein Verformungsbereich 6 angeordnet, der über einem Endstück 7 eines steifen Fahrzeugrahmens sitzt. Im Bereich der Rückseite 3 ist ein weiterer Verformungsbereich 5 angeordnet. Zwischen dem frontseitigen Verformungsbereich 6 und dem rückwärtigen Verformungsbereich 5 ist eine Sicherheitszelle 4 angeordnet, die einen nicht näher bezeichneten Sitzbereich umgibt.

Fig. 2 zeigt das Nutzfahrzeug aus Fig. 1 in einer Auffahrsituation, bei der das auffahrende Nutzfahrzeug mit seinem Endstück 7 des Fahrzeugrahmens in einem Kontaktbereich 9 sich auf dem Fahrzeugrahmen des vorderen Nutzfahrzeugs abstützt.

Das Fahrerhaus 1 ist in den Verformungsbereichen 5, 6 des Frontbereichs 2 und der Rückseite 3 gestaucht, und die Sicherheitszelle 4 ist gegenüber dem nicht näher bezeichneten Fahrzeugrahmen nach hinten verschoben. Ein Abstand R ist zwischen den beiden Lastkraftwagen erhalten geblieben, innerhalb dem sich die Sicherheitszelle 4 befindet.

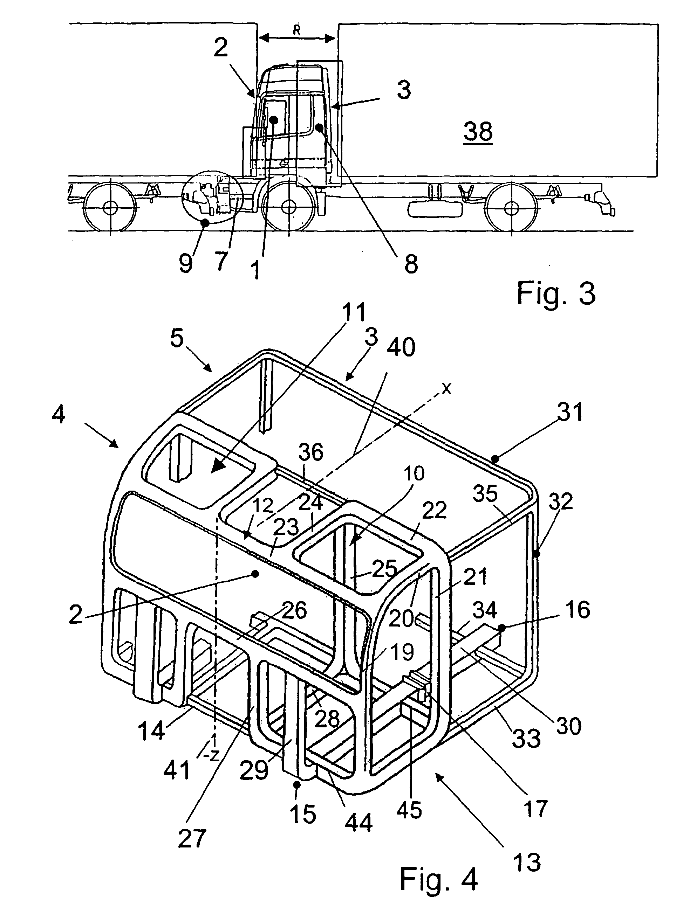

Als Vergleich ist in Fig. 3 die Situation mit einem konventionellen Nutzfahrzeug dargestellt. Ein übliches, insgesamt steif ausgeführtes Fahrerhaus 1 wird von vorne gestaucht, und ein Bereich 8 an der Rückseite 3 des Fahrerhauses 1 bleibt intakt, wenn im Kontaktbereich 9 die Fahrzeugrahmen der beiden beteiligten Nutzfahrzeuge aufeinander treffen.

Fig. 4 zeigt eine bevorzugte Tragstruktur eines Fahrerhauses 1 mit einer Sicherheitszelle 4. Im Frontbereich 2 (Fig. 1 und 2) ist eine steife, käfigartigen Sicherheitszelle 4 angeordnet, an die sich ein weicher Verformungsbereich 5 zur Aufnahme von Verformungsenergie anschließt. Der Verformungsbereich 5 ist zwischen einem Sitzbereich 13 und dem Ladebereich 38 aus Fig. 1, 2 angeordnet. Der Verformungsbereich 5 ist aus weichen Längsstreben 33, 35, Querstreben 31, 34 und Hochstreben 32 gebildet und umgibt einen Wohn- und Schlafbereich des Fahrerhauses 1.

Die Sicherheitszelle 4 ist hier für einen nicht dargestellten Fahrersitz und einen nicht dargestellten Beifahrersitz ausgebildet und aus einer Fahrerzelle 10 und einer Beifahrerzelle 11 zusammengesetzt. Die Fahrerzelle 10 und die Beifahrerzelle 11 sind durch ein weiche dachseitige Strebe 36 auf der zur Rückseite 3 des Fahrerhauses 1 gewandten Seite der Sicherheitszelle 4 und eine im Frontbereich bodenseitig angeordnete weiche Strebe 14 verbunden. Im Frontbereich 2 verbindet eine steife dachseitige Querstrebe 12 sowie eine steife Querstrebe 26 auf der Höhe einer Brüstung einer Windschutzscheibe Fahrerzelle 10 und Beifahrerzelle 11.

Die Sicherheitszelle 4 ist im Wesentlichen symmetrisch zu einer dachseitigen Mittellinie 40 und einer frontseitigen Mittellinie 41. Der Übersichtlichkeit wegen sind nur Bezugszeichen für die Fahrerzelle 10 angegeben.

Die erfindungsgemäße Tragstruktur umfasst zumindest die steife Sicherheitszelle 4 sowie den Längsträger 30. Zusätzlich ist in diesem Ausführungsbeispiel anschließend an die Sicherheitszelle 4 ein weicher Verformungsbereich 5 angeordnet.

Das Fahrerhaus 1 ist auf einem Fahrerhauslager 15 eines Längsträgers 30 gelagert, bei dem ein Teil hinter dem Sitzbereich 13 als Verformungsbereich 17 ausgebildet ist.

Der Längsträger 30 weist einen Aufnahmebereich 29 auf, der der Sicherheitszelle 4 vorgelagert ist. Der Längsträger 30 L-förmig ausgebildet ist, wobei der Aufnahmebereich 29 einen ersten Schenkel 29 bildet, der vor der Sicherheitszelle 4 aufgestellt ist. Das Fahrerhaus 1 ist auf einem zweiten Schenkel die Sicherheitszelle 4 gelagert. Die Sicherheitszelle 4 ist mit dem Längsträger 30 gegenüber einem Fahrzeugrahmen verschiebbar ausgebildet. Ein hinteres Fahrerhauslager 16 kann an dem Fahrzeugrahmen abgestützt sein.

Die Sicherheitszelle 4 ist in der Art eines Quaders ausgebildet ist, wobei Quaderkanten durch steife, längs einer Fahrzeugachse angeordnete Streben 18, 20, 24, 28, quer zur Fahrzeugachse angeordnete steife Streben 23, 22, 26, 44, 45, und vertikal angeordnete steife Streben 19, 21, 25, 27 gebildet sind. Die vertikale Strebe 25 bildet mit der quer angeordneten Strebe 22 einen Überrollbügel. Optional kann auch auf eine vertikale steife Strebe 25 hinter dem Fahrersitz verzichtet werden oder eine solche nur in der Fahrerzelle 10 vorgesehen sein, um Gewicht zu sparen.

Im Türbereich 46 kann eine nicht dargestellte Fahrzeugtür vorgesehen sein, die versteift und/oder verstärkt ist und z.B. eine übliche Balkenfunktion mit Ringstrukturen aufweist, so dass ein Abwehren beispielsweise eines seitlichen Eindringens von Deformationsenergie oder auch eine zusätzliche Versteifung bei Frontalkollisionen von der Fahrzeugtüre unterstützt werden kann.

Weiterhin ist im Fahrerhaus 1 eine Abstützung für ein nicht dargestelltes Armaturenbrett vorgesehen, so dass im Deformationsfall ein Eindringen des Armaturenbretts in die Sicherheitszelle 4 vermieden werden kann.

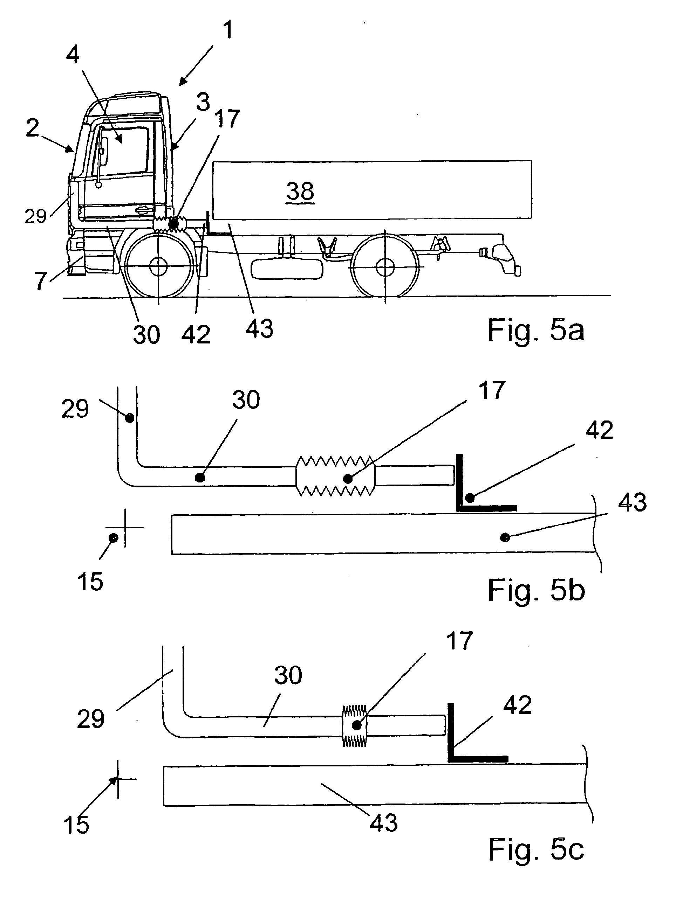

Fig. 5 a, b, c zeigt eine Tragstruktur eines Fahrerhauses gemäß einem zweiten Ausführungsbeispiel. Die Tragstruktur umfasst eine steife Sicherheitszelle 4 und einen Längsträger 30 mit einem integrierten Verformungsbereich 17 (Fig. 5 a). Das Fahrerhaus 1 ist in kurzer Bauweise ausgeführt und weist keinen wohn- und Schlafbereich an der Rückseite 3 auf. Das Fahrerhaus 1 ist auf einem L-förmigen Längsträger 30 gelagert, der in einem Frontbereich 2 des Fahrerhauses 1 einen nach oben aufgestellten Schenkel als Aufnahmebereich 29 aufweist. Im Bereich der Rückseite 3 des Fahrerhauses 1 ist im Längsträger 30 ein Verformungsbereich 17 zwischen einem von einer steifen, käfigartigen Sicherheitszelle 4 umgebenen Sitzbereich 13 und einer Abstützung 42 angeordnet. Bei einer Krafteinwirkung von vorne kann die Sicherheitszelle 4 nach hinten ausweichen und sich gezielt relativ zu einem Fahrzeugrahmen 43 bewegen. Die Abstützung 42 stützt den Längsträger 30 gegen einen Fahrzeugrahmen 43 ab (Fig. 5 b). Fig. 6 zeigt den Längsträger 30 im Normalzustand. Die nicht dargestellte Sicherheitszelle 4 sitzt zwischen Aufnahmebereich 29 und Verformungsbereich 17. Das Fahrerhaus 1 ist auf einem vorderen Fahrerhauslager 15 abgestützt.

Fig. 5c zeigt den Längsträger 30 im verformten Zustand nach einem Auffahrunfall. Der vordere Bereich des Längsträgers 30, auf dem die Sicherheitszelle 4 sitzt, ist unverändert, während der Verformungsbereich 17 gestaucht ist. Der Verformungsbereich 17 ist hinter dem Fahrerhaus angeordnet. Wirkt eine Kraft auf den als aufgestellten Schenkel ausgebildeten Aufnahmebereich 29, wird diese über den Längsträger 30 zum Verformungsbereich 17 geleitet und dort in Verformungsarbeit umgesetzt. Die Sicherheitszelle 4 wird im Wesentlichen unverformt nach hinten verschoben.

Die Verformungsbereiche 5, 6, 17 sind vorzugsweise aus üblichen Crashstrukturen gebildet, wie etwa faltbare oder stauchbare Strukturen aus Profilmaterial wie Rohre oder U-Träger und dergleichen.

Die Erfindung ist leicht und unaufwändig in Fahrerhäuser integrierbar und besonders für Frontlenker-Lastkraftwagen geeignet, die keinen Vorbau an der Vorderseite zur Aufnahme von Verformungsbereichen aufweisen.

## Patentansprüche

1. Fahrerhaus-Tragstruktur für ein Nutzfahrzeug, insbesondere für ein schweres Nutzfahrzeug, wobei eine Sicherheitszelle (4) in einem Fahrerhaus (1) mit einem Frontbereich (2) und einer einem Ladebereich (38) zugewandten Rückseite (3) angeordnet ist, wobei ein Sitzbereich (13) von der steifen Sicherheitszelle (4) umgeben ist, an die sich zwischen Sitzbereich (13) und Ladebereich (38) ein Verformungsbereich (5, 17) zur Aufnahme von Verformungsenergie anschliel3t, und mit einem Längsträger (30), wobei die Sicherheitszelle (4) mit dem Längsträger (30) gegenüber einem Fahrzeugrahmen verschiebbar ausgebildet ist,
**dadurch gekennzeichnet,**
**dass** die Sicherheitszelle (4) käfigartig ausgebildet ist und ein Teil des Längsträgers (30) hinter dem Sitzbereich (13) als Verformungsbereich (17) ausgebildet ist.

2. Fahrerhaus-Tragstruktur nach Anspruch 1,
**dadurch gekennzeichnet,**
**dass** der Verformungsbereich (5, 17) einen Teil des Fahrerhauses (1) umfasst.

3. Fahrerhaus-Tragstruktur nach Anspruch 2,
**dadurch gekennzeichnet,**
**dass** das Fahrerhaus (1) in einem hinter dem Sitzbereich (13) angeordneten Wohn- oder Schlafbereich als Verformungsbereich (5) ausgebildet ist.

4. Fahrerhaus-Tragstruktur nach Anspruch 1,
**dadurch gekennzeichnet,**
**dass** der Verformungsbereich (17) zwischen dem Sitzbereich (13) und einer Abstützung (42) gegen einen Fahrzeugrahmen (43) angeordnet ist.

5. Fahrerhaus-Tragstruktur nach Anspruch 1,
**dadurch gekennzeichnet,**
**dass** der Längsträger (30) einen Aufnahmebereich (29) aufweist, der des (4) vorgelagert ist.

6. Fahrerhaus-Tragstruktur nach einem der der Ansprüche 4 oder
**dadurch gekennzeichnet,**
**dass** der Längsträger (30) L-förmig ausgebildet ist, wobei ein erster Schenkel (29) des Längsträgers (30) vor der Sicherheitszelle (4) aufgestellt ist und auf einem zweiten Schenkel die Sicherheitszelle (4) gelagert ist.

7. Fahrerhaus-Tragstruktur nach Anspruch 1,
**dadurch gekennzeichnet,**
**dass** die Sicherheitszelle (4) in der Art eines Quaders ausgebildet list, wobei Quaderkanten durch Überrollbügel (9) gebildet sind.

8. Fahrerhaus-Tragstruktur nach Anspruch 1,
**dadurch gekennzeichnet,**
**dass** die Sicherheitszelle (4) aus einer separaten Fahrerzelle (10) und einer separaten Beifahrerzelle (11) gebildet ist.

9. Fahrerhaus-Tragstruktur nach Anspruch 1,
**dadurch gekennzeichnet,**
**dass** der Sicherheitszelle (4) ein zusätzlicher Verformungsbereich (6) vorgelagert ist.

## Claims

1. Driver's cab supporting structure for a commercial vehicle, particularly for a heavy commercial vehicle, wherein a safety cell (4) is arranged in a driver's cab (1), with a front region (2) and a rear side (3) facing a loading region (38), wherein a seating region (13) is surrounded by the stiff safety cell (4), to which a deformation region (5, 17) for receiving deformation energy is connected between the seating region (13) and the loading region (38), and with a longitudinal member (30), wherein the safety cell (4) with the longitudinal member (30) is formed in a displaceable manner with regard to the vehicle frame,
**characterised in that**
the safety cell (4) is formed in a cage-like manner and a part of a longitudinal member (30) behind the seating region (13) is formed as a deformation region (17).

2. Driver's cab supporting structure according to claim 1,
**characterised in that**
the deformation region (5, 17) comprises a part of the driver's cab (1).

3. Driver's cab supporting structure according to claim 2,
**characterised in that**
the driver's cab (1) is formed as a deformation region (5) in a living or sleeping region arranged behind the seating region (13).

4. Driver's cab supporting structure according to claim 1,
**characterised in that**
the deformation region (17) is arranged between the seating region (13) and a support (42) against a vehicle frame (43).

5. Driver's cab supporting structure according to claim 1,
**characterised in that**
the longitudinal member (30) has a receiving region (29) which is upstream of the safety cell.

6. Driver's cab supporting structure according to one of claims 4 or 5,
**characterised in that**
the longitudinal member (30) is formed as a L-shape, wherein a first leg (29) of the longitudinal member (30) is placed in front of the safety cell (4), and the safety cell (4) is mounted on a second leg.

7. Driver's cab supporting structure according to claim 1,
**characterised in that**
the safety cell (4) is formed in the shape of a cuboid, wherein the cuboid edges are formed by roll bars (9).

8. Driver's cab supporting structure according to claim 1,
**characterised in that**
the safety cell (4) is formed of a separate driver's cell (10) and a separate passenger's cell (11).

9. Driver's cab supporting structure according to claim 1,
**characterised in that**
an additional deformation region (6) is mounted upstream of the safety cell (4).

## Revendications

1. Structure de support de cabine de conduite pour un véhicule utilitaire, en particulier pour un véhicule utilitaire lourd, ladite cabine de conduite (1) comportant une cellule de sécurité (4) pourvue d'une zone avant (2) et d'une zone arrière (3) faisant face à une zone de chargement (38), une zone de siège (13) est entourée d'une cellule de sécurité (4) rigide, et une zone de déformation (5, 17) destinée à absorber l'énergie de déformation est située adjacente à ladite cellule entre la zone de siège (13) et la zone de chargement (38) et avec un support (30) longitudinal, la cellule de sécurité (4) avec le support (30) longitudinal face à un châssis de véhicule étant formée de façon à pouvoir coulisser, **caractérisée en ce que** la cellule de sécurité (4) est formée en forme de cage et une partie du support longitudinal (30) derrière la zone de siège (13) est formée en tant que zone de déformation (17).

2. Structure de support de cabine de conduite selon la revendication 1, **caractérisée en ce que** la zone de déformation (5, 17) comprend une partie de la cabine de conduite (1).

3. Structure de support de cabine de conduite selon la revendication 2, **caractérisée en ce que** la cabine de conduite (1) est formée en tant que zone de déformation (5) dans une zone de couchage et d'habitation disposée derrière la zone de siège (13).

4. Structure de support de cabine de conduite selon la revendication 1, **caractérisée en ce que** la zone de déformation (17) est disposée entre la zone de siège (13) et un support (42) contre un châssis de véhicule (43).

5. Structure de support de cabine de conduite selon la revendication 1, **caractérisée en ce que** le support longitudinal (30) présente une zone de logement (29) qui est montée en amont de la cellule de sécurité (4).

6. Structure de support de cabine de conduite selon l'une quelconque des revendications 4 ou 5, **caractérisée en ce qu'**un premier montant (29) du support longitudinal (30) est disposé avant la cellule de sécurité (4) et **en ce que** la cellule de sécurité (4) est montée sur un second montant.

7. Structure de support de cabine de conduite selon la revendication 1, **caractérisée en ce que** la cellule de sécurité (4) est conçue en forme de rectangle, les bords dudit rectangle sont formés par un arceau de sécurité (9).

8. Structure de support de cabine de conduite selon la revendication 1, **caractérisée en ce que** la cellule de sécurité (4) est formée par une cellule de conducteur séparée (10) et une cellule de passager séparée (11).

9. Structure de support de cabine de conduite selon la revendication 1, **caractérisée en ce qu'**une zone de déformation supplémentaire (6) est disposée en amont de la cellule de sécurité (4).
